(19) Europäisches Patentamt
European Patent Office
Office européen des brevets

(11) Veröffentlichungsnummer: **0 230 497**
**B1**

(12) # EUROPÄISCHE PATENTSCHRIFT

(45) Veröffentlichungstag der Patentschrift: **05.12.90**

(51) Int. Cl.$^5$: **B42D 15/02**

(21) Anmeldenummer: **86101100.5**

(22) Anmeldetag: **28.01.86**

(54) **Kartenförmiger Datenträger und Verfahren zu seiner Herstellung.**

(43) Veröffentlichungstag der Anmeldung:
**05.08.87 Patentblatt 87/32**

(45) Bekanntmachung des Hinweises auf die Patenterteilung:
**05.12.90 Patentblatt 90/49**

(84) Benannte Vertragsstaaten:
**AT BE CH DE FR GB IT LI LU NL SE**

(56) Entgegenhaltungen:
**DE-A- 2 511 368**
**DE-C- 3 248 784**
**FR-A- 2 564 622**
**GB-A- 2 111 910**
**GB-A- 2 132 136**

(73) Patentinhaber: **MAURER ELECTRONICS GMBH,**
**Nymphenburger Strasse 154, D-8000 München 19(DE)**

(72) Erfinder: **Maurer, Thomas, Apolloweg 12,**
**D-8000 München 60(DE)**

(74) Vertreter: **TER MEER - MÜLLER - STEINMEISTER & PARTNER, Mauerkircherstrasse 45,**
**D-8000 München 80(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Gegenstand der Erfindung ist ein kartenförmiger Datenträger auf der Grundlage von Kunststoffschichten mit Merkmalen in Form von Mustern oder Zeichen, deren Hell-Dunkel-Kontrat sich vom Auflicht zum Durchlicht unterscheidet, sowie ein Verfahren zu seiner Herstellung.

Wertpapiere, wie beispielsweise Banknoten oder Schecks und Ausweisdokumente, wie Kreditkarten, Ausweiskarten, Scheckkarten und dergleichen, müssen durch spezielle Echtheitsmerkmale gegen betrügerische Angriffe, wie Fälschung und Verfälschung geschützt sein. Beispielsweise versieht man kartenförmige Datenträger, wie Kreditkarten, Ausweiskarten, Scheckkarten und dergleichen, mit einer transparenten Deckfolie, die zum einen verhindert, daß die auf dem Datenträger aufgezeichneten Daten (Text, Bilder, Logos, Muster, Hoheitszeichen uddreichen) durch Verschmutzen oder Abrieb beim normalen Gebrauch unleserlich bzw. unkenntlich werden, und daß andererseits die Daten in einfacher Weise und mit geringem Aufwand verändert oder verfälscht werden können. Gerade bei den heute gerne verwendeten kartenförmigen Datenträgern besteht ein grundlegende Bedürfnis dafür, diese in größtmöglichstem Maße gegen Verfälschung, Vervielfältigung und/oder Totalfälschung zu schützen. Dabei soll der Versuch der Fälschung sicher und ohne aufwendige Prüfmethoden und möglichst auch für den Laien ohne zusätzliche Prüfmittel oder Geräte festgestellt werden können, um die "echten" Datenträger von den Falsifikaten zu unterscheiden.

An Ausweisdokumente und damit auch an kartenförmige Datenträger der erfindungsgemäß angestrebten Art werden drei charakteristische Anforderungen gestellt, nämlich

1. jeder Ausweis muß unbetrügbar und eindeutig einem System zugeordnet werden können;
2. jeder Ausweis muß ein Unikat darstellen und
3. jeder Ausweis muß unverfälschbare, personenspezifische Daten des jeweiligen Ausweisinhabers enthalten.

Die Zuordnung zu einem bestimmten System erfolgt in der Regel durch bestimmte Zeichen, beispielsweise Logos, die nach Möglichkeit, d.h. bei hohen Anforderungen an die Sicherheit, durch bestimmte Echtheitsmerkmale (zum Beispiel Wasserzeichen) oder bestimmten Ausführungsformen eines Echtheitsmerkmals (beispielsweise Wasserzeichen in Form eines Logos, wie bei der Euroscheckkarte), dargestellt sind.

Zur Erschwerung bzw. Verhinderung von Fälschungen kann der Informationsträger durch verschiedene Maßnahemen unter Anwendung von aus dem Wertpapier-oder Banknotendruck bekannten Techniken abgesichert werden, beispielsweise durch den Einsatz eines kartenförmigen Datenträgers mit einem Karteninlett aus einem Wasserzeichenpapier, welches gegebenenfalls mit sogenannten Guillochen in mehreren Farben bedruckt sein kann, wie es beispielsweise für die Scheckkarte bekannt ist. Diese Sicherheits- oder Echtheitsmerkmale, wie das Wasserzeichen oder der Guillochedruck bei Banknoten, lassen sich nur mit aufwendigen Verfahren herstellen und können daher nur sehr schwer nachgeahmt werden, was diesbezügliche Fälschungsversuche allerdings nicht ausschließt. Darüber hinaus besteht die Möglichkeit der Entfernung der Deckfolie, wodurch eine Veränderung der Daten möglich wird.

Aus der DE-PS 29 07 004 ist eine Ausweiskarte bekannt, die aus zwei Deckfolien, von denen wenigstens eine transparent ist, und einem Karteninlett aus einem lichtundurchlässigen Material, insbesondere Papier, besteht, welches mit visuell erkennbaren Informationen versehen ist, die mit Hilfe eines Laserstrahls durch die transparente Deckfolie hindurch auf das Inlett aufgebracht worden sind. Durch die Anwendung des Laserstrahls wird das unter der transparenten Deckfolie liegende Substrat geschwärzt, wobei durch die teilweise und den aufgezeichneten Informationen entsprechende Zerstörung des Substratmaterials die Möglichkeit der Verfälschung durch Ablösen der Deckfolie vermieden werden kann. Allerdings ermöglicht eine solche Ausweiskarte die Anwendung eines zusätzlichen Echtheitsmerkmals in Form eines Wasserzeichens bislang nur dadurch, daß als Karteninlett ein mit einem Wasserzeichen bedrucktes Papier oder einem mit einem Wasserzeichen versehene Inlettfolie eingesetzt wird. Durch Entfernen der transparenten Deckfolie läßt sich aber ein solches Wasserzeichen verfälschen.

Da das Wasserzeichen für Wertpapieren in der Sicherungstechnik als Echtheitsmerkmal mit hohem Sicherungswert gilt, besteht ein erhebliches Bedürfnis dafür, auch kartenförmige Datenträger der oben angesprochenen Art mit einem dem Wasserzeichen in Banknoten vergleichbaren Echtheitsmerkmal zu versehen, was aber bei kartenförmigen Datenträgern der oben angesprochenen Art aus Kunststoff bislang nicht gelungen ist. Insoweit sind also bislang keine Kunststoff-Ausweiskarten mit "Wasserzeichen" bekannt. Als "Wasserzeichen" ist dabei ein Muster oder Bild zu verstehen, das bei Betrachtung im Auflicht kaum erkennbar ist, jedoch im Durchlicht als deutlich sichtbares Muster oder Bild in mehreren Graustufen erscheint.

Bedingt durch den Herstellungsprozeß sind solche Ausführungsformen von Echtheitsmerkmalen innerhalb der Fertigungstoleranzen bei allen Dokumenten eines Systems gleich; d.h. eine eindeutige Identifizierung des einzelnen Dokuments (Unikat) ist bei Echtheitsmerkmalen herkömmlicher Art, wie dem Wasserzeichen, nicht möglich. Bei Wertpapieren und Ausweisen wird diese "Unikateigenschaft" durch eine vergleichsweise leicht fälschbare und veränderbare fortlaufende Zifferung des Dokuments erreicht.

Bei automationsfähigen Ausweiskarten sind zur Erzeugung der Unikat-Eigen-schaften Verfahren bekannt die sich die Wolkigkeit des Substrats oder auf einer Magnetspur vorliegende magnetische Muster zu nutzen machen. Diese Verfahren besitzen entweder den Nachteil, daß hierfür entsprechende Fertigungsmaßnahmen erforderlich sind

oder daß die Unikat-Eigenschaft zufällig, d.h. unkontrollierbar entsteht. Im übrigen sind diese Verfahren für die visuelle Erkennung der Echtheit nicht geeignet.

Aus der DE-OS 32 31 460 sind eine Ausweiskarte mit im Auf- und Durchlicht prüfbaren Merkmalen und ein Verfahren zu ihrer Herstellung bekannt. Diese Ausweiskarte besteht aus wenigstens zwei aneinandergrenzenden Kunststoffschichten unterschiedlicher Transparenz, wobei wenigstens eine dieser Schichten Vertiefungen entsrpechend den Mustern oder Zeichen trägt, die vom Material der angrenzenden Kunststoffschicht wenigstens bis zu einem Teil ihrer Tiefe ausgefüllt sind, wodurch der angestrebte Hell-Dunkel-Kontrast erzeugt wird. Diese Ausweiskarte besitzt den Nachteil, daß dieses Echtheitsmerkmal in Form des unterschiedlichen Hell-Dunkel-Kontrasts im Auflicht bzw. Durchlicht bei der Herstellung des Kartenrohlings erzeugt werden muß und nicht in Form von kartenspezifischen oder personenspezifischen Daten ausgebildet werden kann und damit nicht die angestrebte Sicherheit ermöglicht.

Ein Höchstmaß an Sicherheit gegen Fälschung und Verfälschung der personenbezogenen Daten eines kartenförmigen Datenträgers ist dann gegeben, wenn die personenbezogenen Daten, oder zumindest relevante Teile, eindeutig in Form von Echtheitsmerkmalen auf dem Datenträger verankert werden können.

Die Aufgabe der vorliegenden Erfindung besteht somit darin, einen kartenförmigen Datenträger der eingangs angegebenen Gattung derart zu verbessern, daß die oben angegebenen drei charakteristischen Sicherheitsanforderungen erfüllt sind und damit eine noch höhere Fälschungssicherheit bei gleichzeitig einfacher Herstellung und insbesondere das Einbringen von charakteristischen, personenbezogenen Daten in Form eines Wasserzeichens in kartenförmigen Datenträgern aus Kunststoff ermöglicht wird.

Diese Aufgabe wird nun gelöst durch kennzeichnenden Merkmale des kartenförmigen Datenträgers gemäß Hauptanspruch. Die Unteransprüche betreffen besonders bevorzugte Ausführungsformen dieses Erfindungsgegenstandes sowie ein Verfahren zur Herstellung dieses Datenträgers.

Die Erfindung betrifft somit einen kartenförmigen Datenträger auf der Grundlage von Kunststoffschichten mit Merkmalen in Form von Mustern oder Zeichen, deren Hell-Dunkel-Kontrast sich vom Auflicht zum Durchlicht ändert, der dadurch gekennzeichnet ist, daß der Datenträger mit Hilfe des Laserstrahls aufgebrachte die optischen Eigenschaften des Datenträgermaterials modifizierende Informationen trägt, deren visueller Eindruck bei Betrachtung im Auflicht verschieden ist von dem bei Betrachtung im Durchlicht. Vorzugsweise liegen daher die mit Hilfe des Laserstrahls aufgebrachten Informationen nach Art eines Wasserzeichens vor, dessen optischer Eindruck bei Betrachtung im Auflicht anders ist als bei Betrachtung im Durchlicht.

Dabei kann das Wasserzeichen ohne weiteres karten- und/cder personenspezifische Daten umfassen, beispielsweise eine Kartenseriennumerierung und/oder ein Bild des Kartenträgers und/oder seine Unterschrift.

Einer bevorzugten Ausführungsform der Erfindung zufolge umfaßt der erfindungsgemäße Datenträger mit Hilfe des Laserstrahls aufgebrachte Informationen, die im Durchlicht mit einem Grauton und im Auflicht mit zwei verschiedenen Grautönen erscheinen, so daß beispielsweise im Durchlicht nur das Bild des Kartenträgers als Wasserzeichenbild zu erkennen ist, welchem im Auflicht eine zusätzliche Information überlagert sind, wie ein Symbol oder ein Schriftzug, beispielsweise die Unterschrift des Karteninhabers.

Einer weiteren bevorzugten Ausführungsform der Erfindung zufolge besteht das Substrat aus gegebenenfalls gefärbtem Kunststoff und ist auf einer oder beiden Seiten mit einer Deckfolie versehen, die ihrerseits gefärbt sein kann. Dabei ist die obere Deckfolie, durch welche hindurch die Informationen auf das Substrat aufgezeichnet werden und auch wieder optisch erfaßt werden können, transparent, während das Material der rückseitigen Deckfolie transparent oder auch opak, d.h. nur durchscheinend sein kann.

Einer weiteren bevorzugten Ausführungsform der Erfindung zufolge liegen die mit Hilfe des Laserstrahls aufgebrachten Informationen in Form von identischen, übereinanderliegenden Muster auf mindestens zwei unterschiedlichen Substratschichten vor, die ihrerseits durch transparente Schichten getrennt sind. In dieser Weise ergeben sich insbesondere bei zeilenförmig strukturierten Wasserzeichenbildern Kippeffekte beim Betrachten der Karte unter unterschiedlichen Winkeln.

Ein weiterer Gegenstand der Erfindung ist ein Verfahren zur Herstellung des oben beschriebenen kartenförmigen Datenträgers, welches darin besteht, die Informationen mit unterschiedlichem visuellem Eindruck bei Betrachtung im Auflicht und Durchlicht durch Zerstören eines in dem Substrat dispergierten, das Licht absorbierenden und/oder reflektierenden Pigments unter Bildung lichtdurchlässiger Reaktionsprodukte mit Hilfe des Laserstrahls in dem Substrat zu erzeugen. Mit Vorteil verwendet man dabei als Pigment, welches unter der Einwirkung des Laserstrahls lichtdurchlässige Reaktionsprodukte liefert, Aluminiumteilchen, die in Polyvinylchlorid als Substratmaterial dispergiert sind. Mit Vorteil sind die Aluminiumteilchen in Form von feinsten Aluminiumschuppen dispergiert und vermitteln dem kartenförmigen Datenträger ein metallisches Aussehen in jenen Bereichen, in denen das Aluminium nicht durch die Einwirkung des Laserstrahls zerstört bzw. beseitigt ist. Bei Anwendung gefärbter Deck- oder Substratfolien lassen sich weitere optische Effekte erzielen, beispielsweise eine golden wirkende Kunststoff-Ausweiskarte.

Bei der erfindungsgemäß bevorzugten Verfahrensweise wird als Substratmaterial eine mit Aluminiumteilchen gefüllte Polyvinylchloridfolie verwendet, die unter der Einwirkung des für die Aufzeichnung der Informationen eingesetzten Laserstrahls erhitzt wird, was zur Folge hat, daß sich die Kettenmoleküle des Polyvinylchlorids unter Abspaltung von Chlor zersetzen, welches mit dem metallischen Aluminium gemäß der folgenden Reaktionsgleichung reagiert:

$$Al + 3RCl \rightarrow AlCl_3 + 3R'$$

wobei R für den organischen Rest der Polyvinylchlorid-Kettenmoleküle und R' für deren Rest nach Abspaltung der Chloratome stehen. Während das in den nicht von dem Laserstrahl erfaßten Bereichen vorliegende Aluminium lichtundurchlässig ist, bzw. dieses reflektiert, ist das bei der oben bezeichneten entstandene Aluminiumchlorid farblos und hat zur Folge, daß das in dieser Weise mit dem Laserstrahl behandelte Substrat in den Einwirkungsbereichen des Laserstrahls lichtdurchlässig wird, wodurch sich der oben angesprochene "Wasserzeicheneffekt" ergibt. Während nämlich die Folie aufgrund der Aluminiumteilchen an thermisch unbehandelten Stellen für Licht undurchlässig ist, erscheint die Folie an den durch den Laserstrahl behandelten Stellen aufgrund des optischen Verhaltens des Reaktionsproduktes durchscheinend.

Bei entsprechend feiner Dosierung der lokalen Erwärmung - was mit Hilfe eines gesteuerten Laserstrahl-Schreibers ohne weiteres möglich ist - läßt sich die oben angesprochene chemische Reaktion derart steuern, daß die Umwandlung der Aluminiumteilchen nur teilweise erfolgt. Dabei ist es möglich, im Inneren der Ausweiskarte ein Muster zu erzeugen, das bei der Betrachtung im Durchlicht in mehreren Graustufen erscheint und damit mit dem Wasserzeichen von Banknoten vergleichbar ist.

Insbesondere kann durch die Steuerung der Intensität des Laserstrahl-Schreibers über eine inverse Graustufentabelle beispielsweise ein Foto oder eine sonstige Abbildung in Form eines Wasserzeichens in den kartenförmigen Datenträger eingebracht werden. Dabei nimmt die Transparenz des Substratmaterials aufgrund des oben angesprochenen chemischen Prozesses zu und erreicht dann, wenn sämtliche Aluminiumteilchen in das farblose Aluminiumchlorid umgewandelt sind, den Wert der maximalen Transparenz, die aufgrund sonstiger Folieneigenschaften oder des speziellen Kartenaufbaus in bestimmten Grenzen gezielt eingestellt werden kann.

Bei höheren Energien des Laserstrahl-Schreibers überlagert sich diesem "Transparenzeffekt" ein weiterer Effekt, der ansatzweise in der DE-OS 30 48 736 beschrieben ist und gemäß dem das Substratmaterial an den Stellen, an welchen es durch den Laserstrahl lokal erhitzt wird, einer Veränderung unterliegt (Verfärbung, Änderung der mechanischen Festigkeit, erhöhte Beständigkeit gegen chemische Agentien). Es hat sich gezeigt, daß diese Prozesse oder chemischen Reaktionen in einem reinen Kuntstoff-Substratmerial, wie Polyvinylchlorid nicht oder erst bei extrem hohen Leistungen des Laserstrahls ablaufen, dann aber explosiv und daher unkonrollierbar. Es wurde nunmehr gefunden, daß dann, wenn dem Substratmaterial, namentlich dem Polyvinylchlorid unzerstörbare Pigmentteilchen, beispielsweise feinste Rußpartikelchen beigemengt werden, die erwähnten Prozesse oder chemischen Reaktionen bereits bei wesentlich geringeren Leistungen des Laserstrahls in Gang gesetzt werden. Je nach der Konzentration dieser unzerstörbaren Pigmentteilchen kann man diese Prozesse gezielt bei niedrigeren oder höheren Laserstrahl-Leistungen auslösen.

Dabei absorbieren die unzerstörbaren Pigmentteilchen, wie die Rußteilchen, die eingestrahlte Energie im Vergleich zu dem undotierten Substratmaterial, wie Polyvinylchlorid, wesentlich stärker und wirken somit als Keime oder Katalysatoren des oben angesprochenen Prozesses. Aufgrund ihrer geringen Abmessungen sind die einzelnen Pigmentteilchen für das menschliche Auge unsichtbar und beeinflussen aufgrund der geringen erforderlichen Konzentration die Transparenz des Substratmaterials nur ganz unwesentlich. Ähnliche, wenn auch weniger stark ausgeprägte Effekte lassen sich durch Zustätze von Weichmachern zu dem Substratmerial erreichen.

Darüber hinaus läßt sich das Aufzeichnen der Informationen mit Hilfe des Laserstrahls durch eine entsprechende Dosierung der eingestrahlten Leistung gezielt beeinflussen, so daß sich beispielsweise verschiedene Graustufen erzeugen lassen.

Erfindungsgemäß ist es möglich, zur Erzielung besonderer Effekte und damit zur Verbesserung der Fälschungssicherheit des beanspruchten Datenträgers neben dem oder den zerstörbaren, lichtdurchlässige Reaktionsprodukte ergebenden Pigmenten auch unzerstörbare Pigmentteilchen, wie feinste Rußpartikel, welche die Verfärbung des Substratmaterials unter Einwirkung des Laserstrahls begünstigen, in dem Substratmaterial zu dispergieren. Dabei können, die zerstörbaren und die unzerstörbaren Pigmentteilchen in gleichen und/oder unterschiedlichen Substratschichten dispergiert werden, um auf diesem Wege weitere, kaum mehr zu verfälschende Wasserzeicheneffekte zu erzeugen.

Die Erfindung sei im Folgenden näher unter Bezugnahme auf die beigefügten Zeichnungen erläutert. In den Zeichnungen zeigen:

**Fig. 1:** eine vergrößert dargestellte Teilschnittansicht einer Ausführungsform des erfindungsgemäßen kartenförmigen Datenträgers,

**Fig. 2:** ebenfalls eine vergrößert dargestellte Teilschnittansicht einer weiteren Ausführungsform des erfindungsgemäßen kartenförmigen Datenträgers,

**Fig. 3:** eine Kurvendarstellung, die die Abhängigkeit der Transparenz des Substratmaterials von der Intensität des angewandten Laserstrahls verdeutlicht, und

**Fig. 4 und 5:** vergrößert dargestellte Teilschnittansichten weiterer Ausführungsformen des erfindungsgemäßen kartenförmigen Datenträgers.

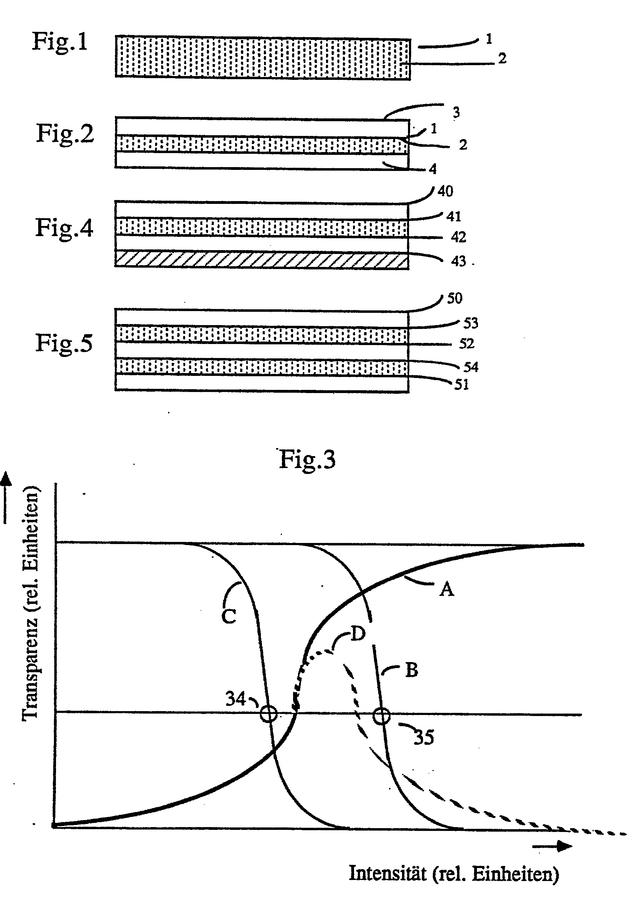

Wie aus der Fig. 1 zu ersehen ist, besteht der kartenförmige Datenträger aus einem Substrat 1, beispielsweise einer Polyvinylchloridfolie, in die beim Herstellungsprozeß gleichmäßig über das gesamte Volumen verteilte feine Aluminiumteilchen 2 eingebracht sind. In dieser Weise erscheint die Folie bei der Betrachtung im Auflicht silbrig, metallisch

glänzend und beim Betrachten im Durchlicht völlig dunkel. Durch Zugabe von geeigneten Farbstoffen können weitere metallischglänzende Farberscheinungen erzeugt werden.

Bei der in der Fig. 2 dargestellten Ausführungsform des erfindungsgemäßen kartenförmigen Datenträgers umfaßt das Substrat 1 mit den darin vorhandenen Aluminiumteilchen 2, eine transparente Deckfolie 3 auf der Vorderseite zum Schutze von drucktechnisch aufgebrachten Informationen und eine rückseitige Deckfolie 4, die transparent oder opak, beispielsweise mit einem weißen Pigment, wie Titandioxid, befüllt sein kann.

Unter der Einwirkung des Laserstrahls unterliegen die in den Figuren 1 und 2 dargestellten Aluminiumteilchen 2 einer Reaktion mit den von dem Polyvinylchlorid abgespaltenen Chloratomen unter Bildung von Aluminiumchlorid gemäß der oben angesprochenen Gleichung, wodurch an diesen Stellen die Transparenz des Substratmaterials im Durchlicht gesteigert wird, wie es oben bereits erläutert worden ist.

Die der vorliegenden Erfindung zugrundeliegende charakteristische Eigenschaft des Substrats, welches Licht absorbierende und/oder reflektierende, unter Bildung von lichtdurchlässigen Reaktionsprodukten mit Hilfe eines Laserstrahls zerstörbares Pigment enthält, sei anhand der Fig. 3 näher erläutert. Die Fig. 3 umfaßt Schwärzungskurven, die in Abhängigkeit von der Konzentration der vorhandenen Verunreinigungen bei höherer (Kurve B) oder geringerer (Kurve C) Intensität der Strahlungsleistung liegen. Die Zunahme der Schwärzung entspricht im Durchlicht einer Abnahme der Transparenz. Die Kurve A verdeutlicht das Verhalten des erfindungsgemäß eingesetzten Substratmaterials unter der Einwirkung des Laserstrahls. Dabei nimmt mit steigender Intensität des Laserstrahls die Transparenz des Materials zu, indem gemäß der oben angesprochenen Reaktion die Aluminiumteilchen in lichtdurchlässiges Aluminiumchlorid umgewandelt werden. Bei höheren Strahlungsleistungen des angewandten Lasers wirken auch die Aluminiumteilchen ähnlich wie die oben angesprochenen Rußpartikel als Keime für den Schwärzungsprozeß. Hierdurch tritt bei höheren Strahlungsleistungen mit zunehmender Einfärbung (Schwärzung) des Substrats gleichzeitig eine Abnahme der Transparenz ein, ein Sachverhalt, der durch die Kurve D in der Fig. 3 dargestellt ist. Wie diese Kurve D, bei der es sich um die Überlagerung der Kurven A und B handelt, erkennen läßt, nimmt bei einem entsprechend dotierten Substratmaterial die Transparenz aufgrund der chemischen Reaktion der Aluminiumteilchen zunächst mit dem Anwachsen der eingestrahlten Energie zu und vermindert sich dann bei gleichzeitiger Zunahme der Schwärzung des Substratmaterials. Hierdurch ergibt sich, daß ein gewünschter Grauwert 33 der Transparenz jeweils durch zwei verschiedene, aber nicht mehr frei wählbaren Graustufen 34 und 35 sich für die Betrachtung im Auflicht darstellen läßt. Auf diese Weise ist es möglich, in einem Bereich der Karte eine bildhafte Darstellung zu erzeugen, die - je nach Betrachtungsweise - im Durchlicht bzw. im Auflicht unterschiedliche Bilder ergibt, die über die Schwärzungs- und Transparenzkurven in einem eindeutigen mathematischen Zusammenhand stehen. Über diese Korrelation die ganz spezifisch durch die Rezeptur des Substratmaterials vorgegeben ist, lassen sich Paare bildhafter Darstellungen erzeugen, die mit sonstigen Mitteln nicht darstellbar sind. Daher können erfindungsgemäß durch eine geeignete Wahl des Verhältnisses von zerstörbarem Pigment zu unzerstörbarem Pigment (Aluminiumteilchen bzw. Rußpartikel) und deren Korngröße und Form sowie ihrer chemischen Zusammensetzung verschiedene Schwärzungs- und Transparenzprofile bewirkt und damit vielfältige Wasserzeichen mit unterschiedlichen Grautönen erzeugt werden.

Bei einer einfachen Ausführungsform der Erfindung lassen sich beispielsweise in einem Bereich, der im Durchlicht in einer Grautönung erscheint, Linien oder Muster in zwei verschiedenen Grautönen darstellen, die nur beim Betrachten im Auflicht erscheinen. Weiterhin ist es möglich, beispielsweise auf einer bildhaften Darstellung, wie einer Fotografie des Karteninhabers, ein Symbol, beispielsweise einen Stempel, ein Logo oder dergleichen, oder einen Schriftzug, beispielsweise die Unterschrift des Karteninhabers darzustellen, welche zusätzlichen Merkmale im Auflicht klar erkennbar sind, nicht jedoch im Durchlicht.

Weitere Variationen dieser Effekte lassen sich durch die Kombination verschiedener Folien und Substratschichten erzielen.

Wenn man beispielsweise gemäß der in Fig. 4 dargestellten Ausführungsform der Erfindung auf der Rückseite des kartenförmigen Datenträgers eine transparente Folie 43 vorsieht, so verschwindet das Wasserzeichen beim Betrachten im Auflicht nahezu völlig, während bei der Anwendung einer weißen, beispielsweise mit Titandioxid gefüllten Folie 43 das Wasserzeichen im Durchlicht weicher erscheint, jedoch auch im Auflicht deutlich erkennbar bleibt.

Bei der in der Fig. 4 dargestellten Ausführungsform umfaßt der datenförmige Datenträger vier Folien, von denen die Deckfolie 40 transparent, die erste Inlettfolie 41 mit Aluminiumteilchen dotiert, die zweite Inlettfolie 42 wierderum transparent und die Rückseitenfolie 43 stark mit Titandioxid gefüllt ist, d.h. weiß mit hoher Opazität ist. Bei diesem Kartenaufbau erscheint das in der die Aluminiumteilchen enthaltenden Folie erzeugte Bild oder Muster bei seitlicher Lichteinwirkung durch die Schnittkarten der Karte über die tranpsarente Innenfolie von innen erleuchtet.

Eine weitere bevorzugte Ausführungsform des erfindungsgemäßen kartenförmigen Datenträgers ist in der Fig. 5 dargestellt. Dieser aus fünf Schichten aufgebaute Datenträger umfaßt jeweils eine transparente Deckfolie auf der Vorderseite und der Rückseite der Karte (50 bwz. 51), sowie eine transparente Zwischenfolie 52 zwischen den beiden Aluminiumteilchen enthaltenden Folien 53 und 54. Bei einem solchen Kartenaufbau treten insbesondere bei zeilenförmig strukturierten Wasserzeichenbildern Kippeffekte auf, wenn die Karte unter verschiedenen Winkeln betrachtet wird.

Über die Tatsache hinaus, daß erfindungsgemäß kartenförmige Datenträger mit karten- oder personenspezifischen "Wasserzeichen" geschaffen werden, ermöglicht die vorliegende Erfindung eine Reihe weiterer gravierender Vorteile gegenüber den bekannten Wasserzeichen von Wertpapieren

- Das Einbringen des Wasserzeichens erfolgt am fertigen Ausweiskartenrohling. Dies vereinfacht zum einen den gesamten Produktionsfluß und macht zum anderen eine aufwendige, gegenüber unerlaubten Zugrifff abgesicherte Lagerhaltung und den Sicherheitstransport der Rohlinge, die bereits mit Echtheitsmerkmalen versehen sind, überflüssig.
- Das Wasserzeichen kann im gleichen Arbeitsschritt zusammen mit den übrigen Daten, mit denen die Ausweiskarte versehen wird, erzeugt werden.
- Die Flexibilität der zur Verfügung stehenden Laserstrahl-Schreiber erlaubt eine Änderung des Wasserzeichens von Ausweiskarte zu Ausweiskarte so daß es möglich wird jede Ausweiskarte in Form eines Unikats auszubilden, beispielsweise durch Anwendung einer Seriennummer in Form eines Wasserzeichens (kartenspezifische Daten).
- Die Erzeugung des Wasserzeichens gleichzeitig mit der Aufzeichnung der übrigen personenbezogenen Daten, verbunden mit der Flexibilität des Laserstrahl-Schreibers ermöglicht die Ausbildung eines personenbezogenen Wasserzeichens, beispielsweise in Form der Unterschrift oder eines Bildes des Karteninhabers, und damit die unverfälschbare Einbindung von Personaldaten in das Echtheitsmerkmal.

In dieser Weise gelingt es auf sehr einfache und elegante Weise die oben angesprochene Aufgabe zu lösen und einen kartenförmigen Datenträger zu liefern, dessen Echtheit auch von "dem Mann auf der Straße" gut erkannt werden kann.

## Patentansprüche

1. Kartenförmiger Datenträger auf der Grundlage von Kunststoffschichten mit Merkmalen in Form von Mustern oder Zeichen, deren Hell-Dunkel-Kontrast sich vom Auflicht zum Durchlicht ändert,
**dadurch gekennzeichnet,**
daß der Datenträger mit Hilfe eines Laserstrahls aufgebrachte, die optischen Eigenschaften des Datenträgermaterials durch Farbpigmentumformung im Datenträgersubstrat modifizierende Informationen trägt, deren visueller Eindruck bei Betrachtung im Auflicht verschieden ist von dem bei Betrachtung im Durchlicht.

2. Datenträger nach Anspruch 1, **dadurch gekennzeichnet,** daß die mit Hilfe des Laserstrahls aufgebrachten Informationen karten- und/oder personenspezifische Daten umfassen.

3. Datenträger nach Anspruch 1 oder 2, **dadurch gekennzeichnet,** daß die mit Hilfe des Laserstrahls aufgebrachten Informationen nach Art eines Wasserzeichens vorliegen.

4. Datenträger nach Anspruch 3, **dadurch gekennzeichnet,** daß die in Form eines Wasserzeichens vorliegenden Informationen zusätzliche, im Auflicht unterschiedliche Grautöne ergebende Informationen tragen.

5. Datenträger nach Anspruch 4, **dadurch gekennzeichnet,** daß die mit Hilfe des Laserstrahls aufgebrachten Informationen im Durchlicht in einem Grauton und im Auflicht in zwei verschiedenen Grautönen erscheinen.

6. Datenträger nach Anspruch 4 oder 5, **dadurch gekennzeichnet,** daß die in Form eines Wasserzeichens vorliegenden Informationen eine nur im Durchlicht erscheinende bildhafte Darstellung umfassen, die als zusätzliche Informationen ein Symbol oder einen Schriftzug trägt, das bzw. der im Durchlicht nicht, jedoch im Auflicht klar erkennbar ist.

7. Datenträger nach mindestens einem der vorhergehenden Ansprüche, **dadurch gekennzeichnet,** daß das Substrat aus gegebenenfalls gefärbtem Kunststoff besteht und auf einer oder beiden Seiten mit gegebenenfalls gefärbten Deckfolien versehen ist und die Informationen mit Hilfe des Laserstrahls durch die transparente Deckfolie hindurch auf das Substrat aufgebracht sind.

8. Datenträger nach Anspruch 7, **dadurch gekennzeichnet,** daß die obere Deckfolie transparent und die rückseitige Deckfolie transparent oder opak ist.

9. Datenträger nach mindestens einem der vorhergehenden Ansprüche, **dadurch gekennzeichnet,** daß die mit Hilfe des Laserstrahls aufgebrachten Informationen in Form von identischen, übereinanderliegenden Mustern auf mindestens zwei unterschiedlichen, durch transparente Schichten getrennten Substratschichten vorliegen.

10. Verfahren zur Herstellung des Datenträgers nach den Ansprüchen 1 bis 9, **dadurch gekennzeichnet,** daß die Informationen mit unterschiedlichem visuellem Eindruck bei Betrachtung im Auflicht und Durchlicht durch Zerstören eines in dem Substrat dispergierten, das Licht absorbierenden und/oder reflektierenden Pigments unter Bildung lichtdurchlässiger Reaktionsprodukte mit Hilfe des Laserstrahls in dem Substrat erzeugt werden.

11. Verfahren nach Anspruch 10, **dadurch gekennzeichnet,** daß als lichtdurchlässige Reaktionsprodukte ergebendes Pigment Aluminiumteilchen und als Substratmaterial Polyvinylchlorid verwendet werden.

12. Verfahren nach Anspruch 10, **dadurch gekennzeichnet,** daß das Substrat zusätzlich zu dem zerstörbaren und lichtdurchlässige Reaktionsprodukte ergebenden Pigment dispergierte, unzerstörbare Pigmentteilchen enthält, welche die Verfärbung des Substratmaterials unter der Einwirkung des Laserstrahls begünstigen.

13. Verfahren nach Anspruch 12, **dadurch gekennzeichnet,** daß als unzerstörbaren Pigmentteilchen feinste Rußpartikel in dem Substratmaterial dispergiert sind.

14. Verfahren nach Anspruch 12 oder 13, **dadurch gekennzeichnet,** daß die unzerstörbaren Pigmentteilchen in einer die Transparenz des Substrats nicht beeinträchtigenden Teilchengröße und Menge in dem Substratmaterial dispergiert sind.

15. Verfahren nach den Ansprüchen 12 bis 14,

**dadurch gekennzeichnet**, daß die zerstörbaren und die unzerstörbaren Pigmentteilchen in der gleichen und/oder unterschiedlichen Substratschichten dispergiert sind.

## Claims

1. A record carrier in card form based on plastic layers which characteristics in the shape of symbols or signs whose dark/light contrast varies in incident and transmitted light, characterized by the fact that the record embodies information introduced by a laser beam which modifies the optical properties of the record carrier material by means of a coloured pigment pattern in the carrier substrate, the visual impression produced in incident light being different from that received with transmitted light.

2. Record carrier in accordance with Claim 1, characterized by the fact that the information introduced by the laser beam comprises details specific to the card and/or person.

3. Record carrier in accordance with Claim 1 or 3, characterized by the fact that the information introduced by the laser beam takes the form of a watermark.

4. Record carrier in accordance with Claim 3, characterized by the fact that the information occurring in the form of a watermark conveys additional information which appears as differing grey tones in incident light.

5. Record carrier in accordance with Claim 4, characterized by the fact that the information introduced by the laser beam appears as a single grey tone in transmitted light and as two different grey tones in incident light.

6. Record carrier in accordance with Claim 4 or 5, characterized by the fact that the information occurring in the form of a watermark comprises a pictorial image apparent only in transmitted light which, as additional information; carries a symbol or an inscription which is clearly identifiable in incident but not in transmitted light.

7. Record carrier in accordance with at least one of the preceding claims, characterized by the fact that the substrate may consist of coloured plastic and be provided on one or both sides with possibly coloured covering films and that the information is imparted to the substrate by the laser beam acting through the transparent covering film.

8. Record carrier in accordance with Claim 7, characterized by the fact that the upper covering film is transparent and the rear covering film is transparent or opaque.

9. Record carrier in accordance with at least one of the preceding claims, characterized by the fact that the information introduced by the laser beam takes the form of identical superimposed patterns on at least two different layers of substrate separated by transparent layers.

10. Process for producing the record carrier in accordance with Claims 1 to 9, characterized by the fact that the laser beam is used to produce in the substrate information which gives a different visual impression when looked at in incident and transmitted light due to the destruction of a light-absorbent and/or reflecting pigment dispersed in the substrate with the formation of reaction products allowing the light to pass through.

11. Process in accordance with Claim 10, characterized by the fact that the pigment used to produce reaction products enabling the light to pass through comprises aluminium particles, and the substrate material used is polyvinyl chloride.

12. Process in accordance with Claim 10, characterized by the fact that the substrate, in addition to the destructible pigment producing reaction products transparent to light, contains dispersed indestructible pigment particles which promote the coloration of the substrate material under the action of the laser beam.

13. Process in accordance with Claim 12, characterized by the fact that the indestructible pigment particles take the form of very fine particles of carbon black dispersed in the substrate material.

14. Process in accordance with Claim 12 or 13, characterized by the fact that the indestructible pigment particles are dispersed in the substrate material in a particle size and quantity such that the transparency of the substrate is not impaired.

12. Process in accordance with the Claims 12 to 14, characterized by the fact that the destructible and indestructible pigment particles are dispersed in the same and/or different substrate layers.

## Revendications

1. Support de données en forme de carte en feuilles en matière synthétique avec des indications sous forme de figures ou de signes dont le contraste optique change à la réflexion et à la transmission, caractérisé en ce que le support de données porte des informations modificatrices des propriétés optiques du matériau support de données par transformation de pigments colorés dans le substrat du support de donnée, obtenues à l'aide d'un faisceau laser, dont l'impression visuelle par examen par réflexion est différente de celle par examen par transmission.

2. Support de données selon la revendication 1, caractérisé en ce que les informations obtenues à l'aide d'un faisceau laser comprennent des données propres à une carte et/ou une personne.

3. Support de données selon la revendication 1 ou 2, caractérisé en ce que les informations obtenues à l'aide d'un faisceau laser sont présente à la manière d'un filigrane.

4. Support de données selon la revendication 3, caractérisé en ce que les informations présentes sous la forme d'un filigrane portent des informations additionnelles en niveaux de gris différents obtenus par réflexion.

5. Support de données selon la revendication 4, caractérisé en ce que les informations obtenues à l'aide d'un faisceau laser apparaissent par transmission avec un niveau de gris et par réflexion avec deux niveaux de gris différents.

6. Support de données selon la revendication 4 ou 5, caractérisé en ce que les informations présentes sous la forme d'un filigrane comportent une aptitude à la représentation graphique seulement en transmission qui porte pour information additionnelle un symbole ou un paragraphe qui de préférence n'est pas clairement perceptible en transmission contrairement à la réflexion.

7. Support de données selon l'une au moins des revendications précédentes caractérisé en ce que le substrat consiste en une matière synthétique colorée s'il y a lieu et est pourvu sur une ou deux faces d'une feuille de revêtement éventuellement colorée et en ce que les informations sont obtenues à l'aide du faisceau laser dans le substrat au travers de la feuille de revêtement transparente.

8. Support de données selon la revendication 7, caractérisé en ce que la feuille de revêtement frontale est transparente et la feuille de revêtement dorsale est transparente ou opaque.

9. Support de données selon l'une au moins des revendications précédentes caractérisé en ce que les informations obtenues à l'aide du faisceau laser sont présentes sous la forme de figures identiques superposées sur au moins deux couches de substrat différentes distinctes au travers de couches transparentes.

10. Procédé pour la confection du support de données selon les revendications 1 à 9, caractérisé en ce que les informations avec effet visuel différent par examen par réflexion et transmission sont engendrées dans le substrat à l'aide du faisceau laser par destruction d'un pigment absorbant et/ou réfléchissant la lumière de réaction translucides.

11. Procédé selon la revendication 10, caractérisé en ce qu'on utilise comme pigment formé par les produits de réaction translucides des particules d'aluminium et comme matière de substrat du chlorure de polyvinyl.

12. Procédé selon la revendication 11, caractérisé en ce que le substrat contient en plus du pigment destructible et translucide formé par les produits de réaction des particules de pigment indestructibles dispersées qui favorisent le changement de coloration de la matière du substrat sous l'action du faisceau laser.

13. Procédé selon la revendication 12, caractérisé en ce que les particules de pigment indestructibles sont des grains de noir de carbone puis dispersés dans la matière du substrat.

14. Procédé selon la revendication 12 ou 13, caractérisé en ce que la taille et la quantité des particules de pigment indestructibles dispersées dans la matière du substrat n'influencent pas la transparence du substrat.

15. Procédé selon la revendication 12 à 14, caractérisé en ce que les particules de pigment destructibles et indestructibles sont dispersées dans la même couche du substrat ou dans des couches différentes.

Fig.1

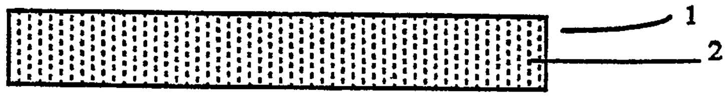


Fig.2

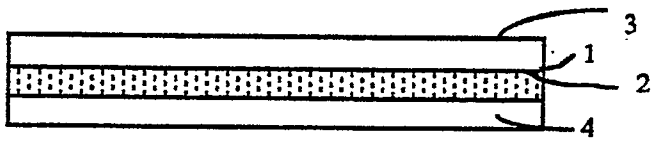


Fig.4

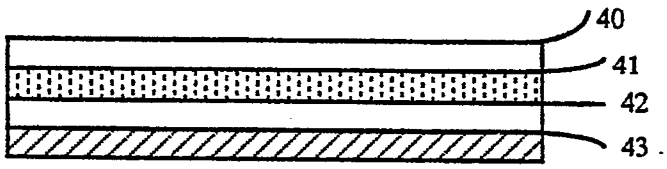


Fig.5

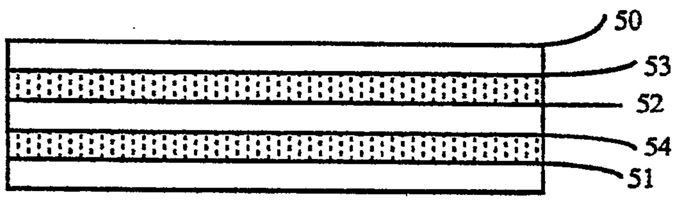


Fig.3